# EUROPEAN PATENT SPECIFICATION

(11) **EP 1 567 799 B1**
(45) Date of publication and mention of the grant of the patent: **05.11.2008**
(21) Application number: 03790109.7
(22) Date of filing: 26.11.2003
(51) Int. Cl.: F16L 33/24, F16L 33/22

(54) **HYDRAULIC HOSE FITTING**
ARMATUR FÜR EINEN HYDRAULIKSCHLAUCH
RACCORD DE TUYAU FLEXIBLE HYDRAULIQUE ET PROCEDE APPARENTE

(30) Priority: 26.11.2002 US 429679 P
(43) Date of publication of application: 31.08.2005
(73) Proprietor: The Gates Corporation, Denver, CO 80202 (US)
(72) Inventor: GILBREATH, Donald, R., Castle Rock, CO 80109 (US)
(74) Representative: Tunstall, Christopher Stephen
(86) International application number: PCT/US2003/037891
(87) International publication number: WO 2004/048839

(56) References cited:
- EP-A- 0 151 017
- DE-U- 8 224 845
- GB-A- 594 546

## Description

### Background of the Invention

### Field of the Invention

This invention relates generally to hydraulic tube and hose couplings. More particularly, it relates to hose end fittings of such couplings. Specifically, it relates to collar and collar support portions of hose end fittings for tube and hose couplings.

### Description of the Prior Art

Hydraulic couplings are known. The hose connection portion or fitting can include a tube or stem portion, a collar and optionally a ferrule. The collar fits about a middle region of the tube portion and is compressed or staked to affix it in place. The ferrule, if present, can also be staked about a portion of the collar to affix it in place. The tube portion has a hose insert portion, which is inserted into the open end of the hose. The ferrule is then compressed or crimped about the hose end containing the insert trapping the hose between the ferrule and the hose insert portion. This causes all portions to be permanently sealed and affixed to prevent axial or rotational movement of the hose end. The hose connection fitting further may have a mating connection portion of many styles, including threaded, press-on, male, and female. Certain mating connection portion designs require the use of collars to make the manufacture of the associated fittings possible. Mating this mating connection portion with the cooperating portion of the fitting connected to the subject fixture, machinery or equipment completes the particular hydraulic assembly that allows a fluid-tight transfer of fluid.

For those fittings having threaded mating connection portions, the collar will commonly include wrench flats to stabilize the fitting from rotating as the mating connection portion is tightened to complete the mating with the cooperating portion of the fixture fitting. Ferrules are included in designs where the fitting and hose operate under severe axial loads that can be the result of high operating pressures or tensile loads imparted to the hose.

There is currently a stake collar design that retains the ferrule on the coupling hose end fitting while supporting a significant longitudinal load. However, this collar design will rotate relative to the stem at fairly low torque values. This collar design is staked on one side of the collar only. Further, a knurl has previously been used in conjunction with an internal spline on a collar to withstand high torque. However, this design cannot be used in cases of have high axial loads where a ferrule is required because it will not support the high axial loads. This collar design is also staked oniy_on one side of the collar. It is also known to braze the collar to the stem. While this produces a fitting with a very secure collar, it is fraught with the manufacturing difficulties brazing introduces and the attendant increase in cost and complexity for its manufacture.

EP0151017 discusses a multi-piece hose stem with a nipple and external sleeve that defines a ferrule locking collar, the sleeve attached to the nipple by a preferred method of radially expanding a portion of the nipple to contact and hold the sleeve.

Accordingly, there is a continuing need for a hydraulic fitting having a separate collar that achieves improvement in both the characteristics of resistance of the collar to twisting relative to the stem when torque is applied to the wrenching portion of the collar and to axial displacement relative to the stem when forced by the ferrule reacting to forces imparted by the hose, without the drawbacks of including brazing.

### Summary of the Invention

The present invention has as an object the provision of a hydraulic fitting with the combination of characteristics including resistance of the collar to twisting relative to the stem when torque is applied to the wrenching portion of the collar and to axial displacement relative to the stem when loaded by the hose.

The present invention is a hydraulic fitting of the type having a stem including a hose insert portion, and a collar support portion. The fitting further has a mating connection portion, and a collar having, a torque communication portion, a ferrule support portion, and an inner periphery extending through the ferrule support portion and the torque communication portion. The fitting is improved by the collar support portion including knurling and an axial stop ring. Further, the torque communication portion of the collar is staked such that the inner periphery extending through the torque communication portion communicates with the knurling of the collar support portion of the stem in a relatively non-rotational manner. Also, the ferrule support portion of the collar is staked such that the inner periphery extending through the ferrule support portion communicates with the axial stop ring of the stem in an axial movement limiting manner.

### Brief Description of the Drawings

The accompanying drawings, which are incorporated in and form part of the specification in which like numerals designate like parts, illustrate preferred embodiments of the present invention and together with the description, serve to explain the principles of the invention. In the drawings:
FIG. 1 is a perspective view of a hydraulic fitting of a preferred embodiment;
FIG. 2 is an elevation of a hydraulic fitting, with one quarter cut-away, of a preferred embodiment;
FIG. 3 is perspective view, of a stem of a hydraulic fitting, of a preferred embodiment;
FIG. 4 is an elevation, with one quarter cut-away, of a stem of a preferred embodiment;
FIG. 5 is perspective view, of a collar of a hydraulic fitting, of a preferred embodiment;
FIG. 6 is an elevation, with one quarter cut-away, of a collar of a preferred embodiment;
FIG. 7 is a partial elevation, with one quarter cut away, of a preferred embodiment of a hydraulic fitting including a staking die;
FIG. 8 is a partial elevation, with one quarter cut away, of another preferred embodiment of a hydraulic fitting including a ferrule and a staking die; and,
FIG. 9 is an elevation of a hydraulic fitting, with one quarter cut-away, of another preferred embodiment.

### Detailed description of the Preferred Embodiments

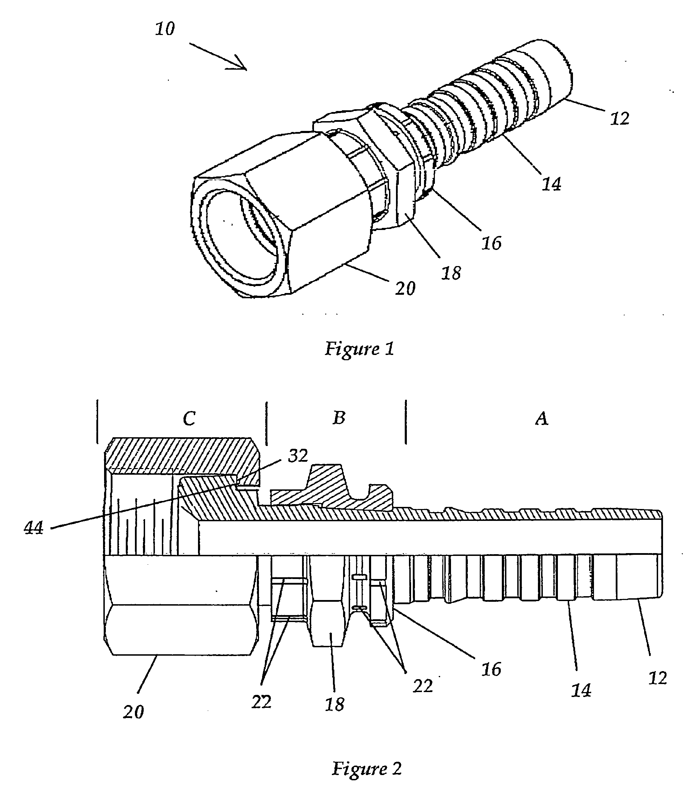

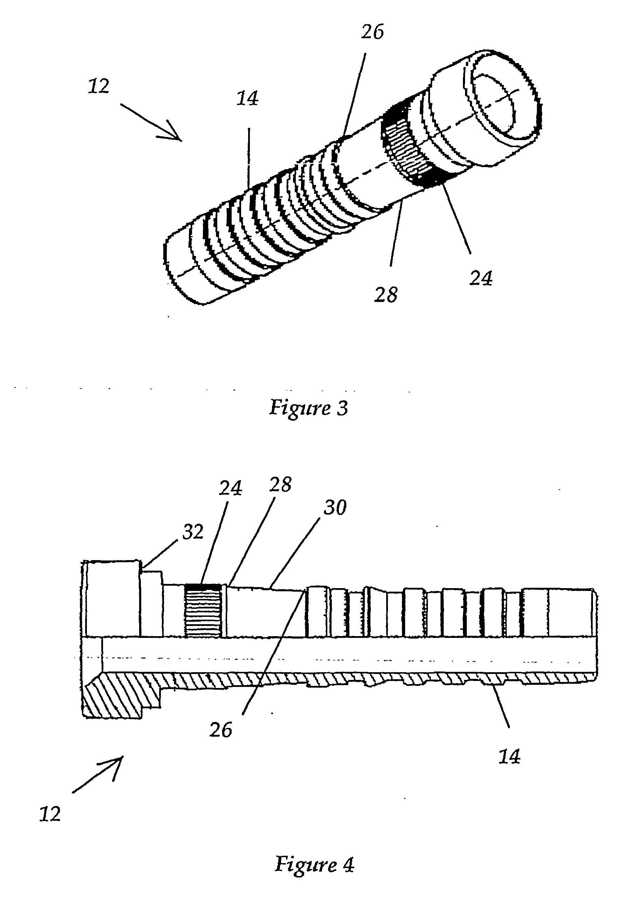

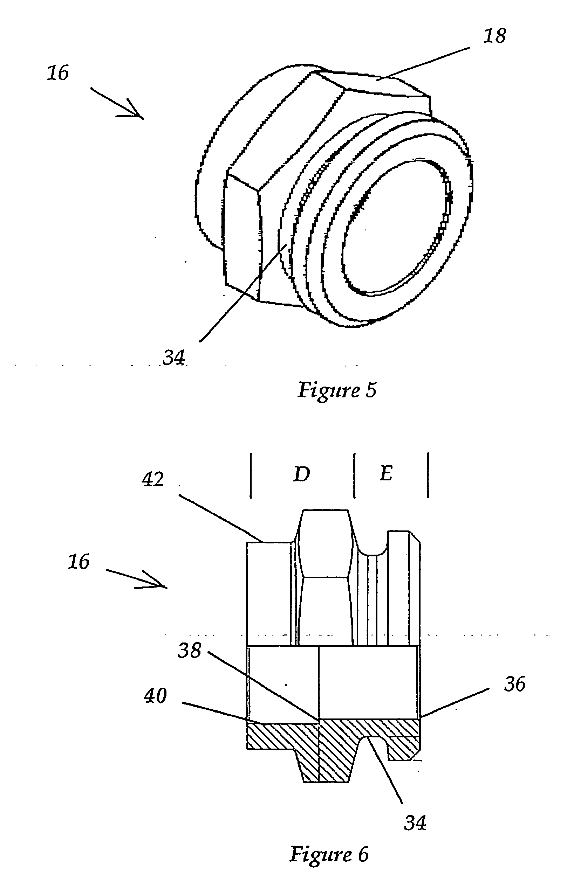

Referring to Figures 1 and 2, one preferred embodiment of this hydraulic hose fitting 10 includes stem 12 having barbs 14, over which is placed collar 16 having wrench flats 18. Also placed over stem 12 is nut 20 having nut abutment 44. The process of staking collar 16 upon stem 12 leaves stake marks 22. Greater detail of stem 12 can be viewed in Figures 3 and 4. Specifically, knurling 24, axial stop ring 26, assembly stop ring 28, ramp 30, and stem abutment 32 are apparent. Greater detail of collar 16 can be viewed in figures 5 and 6. Specifically, ferrule depression 34, axial retention ridge 36, assembly ridge 38, knurling mating surface 40, and free surface 42 are apparent. Collar 16 can be viewed as having torque communication portion D and ferrule support portion E.

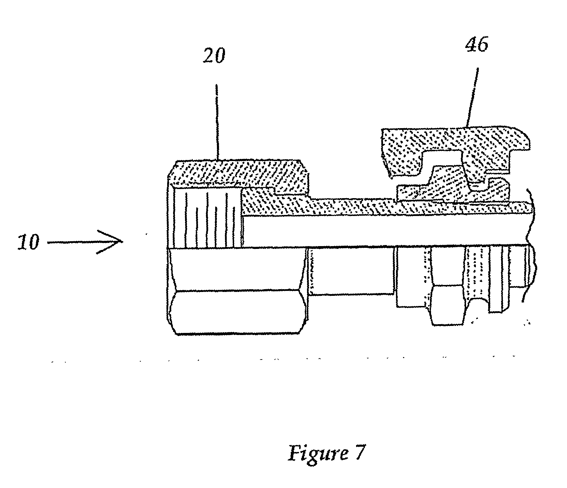

Assembly of this preferred embodiment includes placing nut 20 over stem 12 until nut abutment 32 becomes near or proximate to stem abutment 44, as depicted. Then, collar 16 is placed over stem 12 until assembly ridge 38 abuts assembly stop ring 28. Assembly stop ring 28 is optional. In some instances, the difference in diameters of barbs 14 and the portion of stem 12 having knurling 24 are to similar to allow assembly stop ring 28 to be distinct. Where assembly stop ring 28 is available and distinct, assembly stop ring 28 and assembly ridge 38, aided by ramp 30, provide easy reference to locate collar 16 upon stem 12. Referring to Figure 7, the three pieces once assembled in this manner are placed in a swaging tool, of common design (not depicted), having multiple staking dies 46. For the fitting depicted, the staking dies commonly number eight. The swaging tool presses staking dies 46 against collar 16 on both sides of wrench flats 18 with adequate force to, at once, compress collar 16 to the point where axial retention ridge 36 takes on a diameter smaller than axial stop ring 26 and knurling mating surface 40 is forcefully compressed against knurling 24, as depicted in Figure 2. This operation is evidenced by the staking marks 22 left behind. Thus with a single operation nut 20 is trapped onto stem 12, collar 16 is affixed to stem 12 with a high degree of resistance to rotation upon stem 12 and affixed with a high degree of resistance to being dislodged axially. The result is a hydraulic hose fitting that has been assembled very efficiently and is very robust for applications demanding substantial torque be placed upon the fitting during mating to an apparatus fitting (not depicted) as well as being subjected to substantial axial loads during use.

The fitting can be viewed as having hose insert portion A, collar support portion B, and mating connection portion C. In use, hose insert portion A of fitting 10 is inserted into an open end of a hydraulic hose (not depicted). The hose is sealingly clamped in place. For greatest resistance to the hose being axially separated from fitting 10, a ferrule 48 is used for this clamping function. Ferrule 48 can first be staked upon collar 16 at ferrule depression 34 of ferrule support portion E. Ferrule 48 would then be crimped about the connection end of the hose. Ferrule 48 can also be crimped upon collar 16 before, after, or during crimping upon the hose. The completion of the fluid tight connection involves attachment to a machine or other apparatus (not depicted). Such machine or apparatus will have a machine or apparatus fitting (not depicted) adapted to mate with fitting 10. Nut 20 of mating connection portion C will be tightly threaded upon the apparatus fitting. The tightening will entail applying a wrench to nut 20 to apply tightening torque and applying a wrench to wrench flats 18 to apply stabilizing torque to stem 12 to avoid twisting the hose or fitting 10 within the hose. The instant invention allows very substantial stabilizing torque to be applied that heretofore was unavailable on fittings having collars 16 separate from stems 12 that could also support substantial axial loads.

This preferred embodiment includes free surface 42 on collar 16. This allows simplicity in the staking process by eliminating the need for non-standard six-finger stake dies and eliminating the need for indexing in relation to wrench flats 18. In some cases, this also allows greater space for nut 20 to be retracted while unthreaded from the male threads of an apparatus or machine fitting (not depicted). However, it allows stake marks 22 be visible at torque communication portion D, which may be regarded as unsightly.

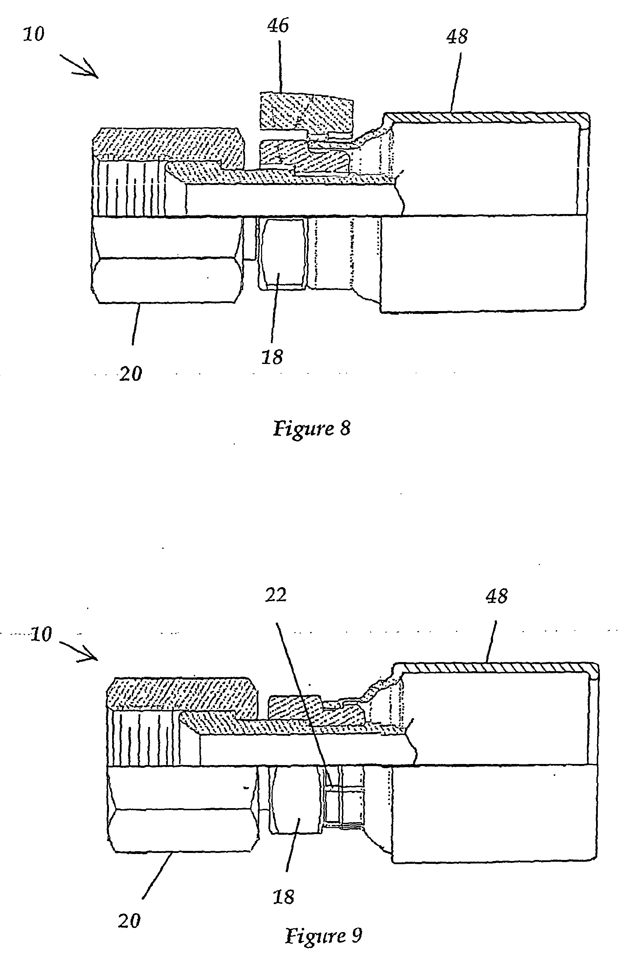

Another preferred embodiment is depicted in Figures 8 and 9. In this embodiment, collar 18 does not include free surface 42. Accordingly, the space available for movement of nut 20 when unthreaded is limited for any given overall length of fitting 10. It has the advantage that the staking process can be applied to wrench flats 18 allowing enough surface area to be involved to preclude leaving the unsightly staking marks 22. However, non-standard six-finger staking dies are required. Figure 8 depicts fitting 10 just prior to the staking process and includes ferrule 48 positioned for staking. Figure 9 depicts fitting 10 after completion of staking. As with the prior embodiment, this embodiment can be produced with or without ferrule 48.

The net result of the instant invention are hydraulic fittings having collars that can withstand both substantial torque and axial force, relative to the stem, and do not require brazing in their manufacture.

The foregoing description and illustrative embodiments of the present invention have been shown on the drawings and described in detail in varying modifications and alternative embodiments. It should be understood, however, that the foregoing description of the invention is exemplary only, and that the scope of the invention is to be limited only to the claims as interpreted in view of the prior art. Moreover, the invention illustratively disclosed herein suitably may be practiced in the absence of any element which is not specifically disclosed herein.

## Claims

1. An hydraulic fitting (10) of the type having a stem (12) including a hose insert portion (A), and a collar support portion (B), having a mating connection portion (C), and a collar (16) having, a torque communication portion (D), a ferrule support portion (E), and an inner periphery extending through said ferrule support portion (E) and said torque communication portion (D),
**characterised by**;
said collar support portion (B) including knurling (40) and an axial stop ring;
said torque communication portion (D) being staked such that said inner periphery extending through said torque communication portion (D) communicates with said knurling (24) in a relatively non-rotational manner; and
said ferrule support portion (E) being staked such that said inner periphery extending through said ferrule support portion (E) communicates with said axial stop ring (26) in an axial movement limiting manner.

2. The hydraulic fitting (10) of claim 1 further comprising a ferrule (48) affixed upon said ferrule support portion (E).

3. A hydraulic coupling and hose comprising:
a hose end fitting including all the features of the hydraulic fitting (10) as claimed in claim 1;
said hose fitted upon said hose end fitting;
an apparatus fitting; and
said apparatus fitting sealingly mated to said mating connection portion (C) of said hose end fitting.

4. The hydraulic coupling and hose of claim 3 further comprising a ferrule (48) staked upon said ferrule support portion (E) and said hose crimped under said ferrule (48).

## Patentansprüche

1. Hydraulikfitting (10) mit einem Schaft (12), mit einem Schlaucheinführungsteil (A) und einem Kragenhalteteil (B), der mit einem Passverbindungsteil (C) und einem Kragen (16) versehen ist, welcher ein Drehmomentübertragungsteil (D), ein Klemmhülsenhalteteil (E) und einen durch das Klemmhülsenhalteteil (E) und das Drehmomentübertragungsteil (D) verlaufenden Innenumfang aufweist,
**dadurch gekennzeichnet, dass:**
das Kragenhalteteil (B) eine Rändelung (40) und einen axialen Anschlagring aufweist;
das Drehmomentübertragungsteil (D) derart abgesetzt ist, dass der durch das Drehmomentübertragungsteil (D) verlaufende Innenumfang drehfest mit der Rändelung (40) verbunden ist; und
das Klemmhülsenhalteteil (E) derart abgesetzt ist, dass der durch das Klemmhülsenhalteteil (E) verlaufende Innenumfang in einer die Axialbewegung begrenzenden Weise mit dem axialen Anschlagring (26) verbunden ist.

2. Hydraulikfitting (10) gemäß Anspruch 1, ferner mit einer an dem Klemmhülsenhalteteil (E) befestigten Klemmhülse (48).

3. Hydraulik-Kupplung und -Schlauch, mit:
einem für ein Schlauchende vorgesehenen Fitting (10) mit sämtlichen Merkmalen des Anspruchs 1;
wobei der Schlauch auf das Schlauchenden-Fitting aufgesetzt ist;
einem Geräte-Fitting; und
wobei das Geräte-Fitting unter Abdichtung passend mit dem Passverbindungsteil (C) des Schlauchenden-Fittings zusammengreift.

4. Hydraulik-Kupplung und -Schlauch gemäß Anspruch 3, ferner mit einer Klemmhülse (48), die auf das Klemmhülsenhalteteil (E) und den unter der Klemmhülse (48) gekrimpten Schlauch aufgesetzt ist.

## Revendications

1. Raccord hydraulique (10) du type ayant une queue (12) comprenant une partie (A) à insérer dans un tuyau, et une partie (B) de support de bague, ayant une partie (C) de connexion d'accouplement, et une bague (16) ayant une partie (D) de communication de couple, une partie (E) de support de virole et une périphérie intérieure s'étendant à travers ladite partie (E) de support de virole et ladite partie (D) de communication de couple,
**caractérisé en ce que**
ladite partie de support de bague (B) comprend un moletage (40) et un anneau de butée axiale ;
ladite partie de communication de couple (D) étant sertie de manière que ladite périphérie intérieure s'étendant à travers ladite partie (D) de communication de couple communique avec ledit moletage (24) de manière à ne pas pouvoir tourner entre eux ; et
ladite partie de support de virole (E) étant sertie de façon que ladite périphérie intérieure à travers ladite partie (E) de support de virole communique avec ledit anneau de butée axiale (26) d'une façon limitant le mouvement axial.

2. Raccord hydraulique (10) selon la revendication 1, comportant en outre une virole (48) fixée sur ladite partie (E) de support de virole.

3. Accouplement et tuyau hydrauliques comportant :
un raccord d'extrémité de tuyau présentant toutes les caractéristiques du raccord hydraulique (10) tel que revendiqué dans la revendication 1 ;
ledit tuyau étant monté sur ledit raccord d'extrémité de tuyau ;
un raccord pour appareil ; et
ledit raccord pour appareil étant accouplé de façon étanche à ladite partie (C) de connexion d'accouplement dudit raccord d'extrémité de tuyau.

4. Accouplement et tuyau hydrauliques selon la revendication 3, comportant en outre une virole (48) sertie sur ladite partie (E) de support de virole et ledit tuyau serré sur ladite virole (48).
